# EUROPEAN PATENT SPECIFICATION

(11) **EP 0 624 602 B1**
(45) Date of publication and mention of the grant of the patent: **09.12.1998**
(21) Application number: 94201288.1
(22) Date of filing: 09.05.1994
(51) Int. Cl.: C08F 8/32, C08F 8/46

(54) **Polyolefin-substituted succinimides**
Polyolefin-substituierte Bersteinsäureimide
Succinimides substituées par une polyoléfine

(30) Priority: 11.05.1993 EP 93303630
(43) Date of publication of application: 17.11.1994
(73) Proprietor: SHELL INTERNATIONALE RESEARCH MAATSCHAPPIJ B.V., 2596 HR Den Haag (NL)
(72) Inventor: Schenk, Cornelis, NL-1031 CM Amsterdam (NL)

(56) References cited:
- EP-A- 0 064 924
- EP-A- 0 264 247
- FR-A- 2 354 347
- US-A- 4 883 886

## Description

This invention relates to polyolefin-substituted succinimides and particularly, although not exclusively, to a process for the preparation of optional-halogenated polyolefin-substituted succinimides, to the succinimides per se and to lubricating oil compositions and additive concentrates containing the succinimides.

Polyolefin-succinic derivatives are well established as dispersant additives for lubricating compositions, being of the dispersant type often referred to as ashless because of the absence of a metal component. These derivatives are prepared by reaction of a polyolefin with maleic anhydride, and subsequent reaction with a polyalcohol or polyamine. The first reaction, between the polyolefin and the maleic anhydride, is often carried out in the presence of chlorine, which permits a reduced reaction time, a more efficient polyolefin utilisation and the production of polyolefin-succinic derivatives in which the molecular proportion of the succinic component is in significant excess, i.e. the ratio of the number of reacted moles of maleic anhydride per mole of polyolefin (the "succination ratio") is significantly greater than 1:1. The first reaction may be achieved by the direct introduction of chlorine or via chlorination of the polyolefin prior to reaction with maleic anhydride. One consequence of these "chlorine" routes is an unavoidable residual amount of chlorine in the final product, particularly when making a product having a high succination ratio using an excess of chlorine and maleic anhydride. The amounts of such residual chlorine are not large, generally in the range of 1000-5000 ppm, and hitherto have been quite acceptable from a practical and commercial standpoint. However, increasing environmental pressures are creating a demand for lubricating compositions with a reduced or negligible amount of residual chlorine, and this criterion cannot easily be met with polyolefin-succinic derivatives produced wholly by the chlorine routes.

An alternative to the "chlorine" routes is the so-called "thermal" route in which the polyolefin and maleic anhydride are heated together, optionally in the presence of a catalyst. This process avoids chlorine residues (except for those present as impurities in the reactants and the catalyst, if used) but tends to be inconveniently slow, with a lower conversion of polyolefin, and also to result in the formation of undesirable amounts of tarry by-products (often referred to as "polymala"). An additional handicap of the thermal route is the difficulty of preparing polyolefin-succinic derivatives in which the molecular proportion of the succinic component is in significant excess.

U.S. Patent Number 4 599 432 (Mitsubishi) discloses a process for the preparation of an alkenyl succinic anhydride, which comprises: heating maleic anhydride and an olefin to effect a thermal addition reaction between the reactants; and further adding a peroxide to cause unreacted olefin and unreacted maleic anhydride to undergo a radical initiated reaction. The patent states that the product obtained in the process is not a pure alkenyl succinic anhydride but is a mixture of compounds useful in the same fields of application as alkenyl succinic anhydrides, such as in the fields of resin modifiers, plasticisers, dispersing agents, lubricating oil additives or rust-preventing agents. The patent does not disclose any further reactions of the product of the process.

U.K. Patent Number 1 398 000 (Mobil) discloses a one-step process for the preparation of alkenyl-succinic anhydrides, which comprises reacting an olefin or halogen-substituted olefin containing at least 20 carbon atoms and maleic anhydride in the presence of an organic peroxide and at an elevated temperature, the olefin or halogen-substituted olefin and the anhydride being mixed and heated to reaction temperature and the peroxide then being added to the reaction mixture. The specific examples each disclose an olefin : maleic anhydride reactant ratio of 1:1. The patent further discloses that the alkenyl-succinic anhydrides prepared by the process may be further reacted with an amine or other compounds to produce valuable additives for industrial fluids.

This invention is based on the discovery of a process for the preparation of optionally halogenated polyolefin-substituted succinimides which may advantageously be used as additives, for example, in lubricating oil compositions.

According to a first aspect of the present invention, there is provided a process for the preparation of an optionally halogenated polyolefin-substituted succinimide, the process comprising:
(i) allowing the product formable by reaction of a optionally halogenated polyolefin with maleic anhydride to react with further maleic anhydride in the presence of a free-radical initiator; and
(ii) reacting the product of step (i) with an amine.

It has been unexpectedly found that polyolefin-substituted succinimides prepared by the process are advantageous dispersants for lubricating compositions. It is believed that the process leads to relatively high maleic anhydride : olefin reactant ratios (i.e. high "succination ratios") in step (i) and that the structures of the maleic anhydride/olefin products formed are different from those obtained by other processes. The reaction of the product of step (i) with an amine leads to the production of succinimides having advantageous properties which are, it is believed, due to the relatively high number of succinimide moieties per olefin molecule and their position on the olefin chain. The process may be used to produce advantageous dispersants via a non-chlorine or low chlorine route.

Preferably, step (i) is preceded by a preliminary step p(i) which comprises reacting optionally halogenated polyolefin with maleic anhydride prior to said reaction with further maleic anhydride in the presence of a free radical initiator.

The reaction of the polyolefin with maleic anhydride in step p(i) may be carried out in the presence of chlorine, in which case the polyolefin is chlorinated during the reaction. Preferably, the reaction of the polyolefin with maleic anhydride is a thermal reaction, in the absence of chlorine. In this case, the reaction is suitably carried out at an elevated temperature, suitably in the range 150°C to 300°C, preferably at the reflux temperature of maleic anhydride (200°C at atmospheric pressure). More preferably, the reaction is carried out under pressure in an autoclave at a temperature in the range 210°C to 250°C.

Preferably, polyolefin is allowed to react with maleic anhydride for at least half-an-hour in step p(i). Thus, preferably said free radical initiator is added in step (i) after some polyolefin and maleic anhydride have been allowed to react in step p(i). Preferably, in step p(i), the polyolefin is allowed to react with maleic anhydride for at least 2 hours, more preferably at least 6 hours before step (i). Suitably, in step p(i) the polyolefin is allowed to react with maleic anhydride for at least 12 hours before step (i).

Preferably, in step p(i), the polyolefin is allowed to react with maleic anhydride until at least 0.3 moles of maleic anhydride have reacted per mole of polyolefin present initially in the reaction mixture. More preferably, the polyolefin is allowed to react with maleic anhydride until at least 0.6 moles of maleic anhydride have reacted per mole of polyolefin present initially in the reaction mixture.

Preferably, the number of moles of maleic anhydride that have reacted with each mole of polyolefin in step p(i) (i.e. the succination ratio) is at least 1.0 mole of maleic anhydride per mole of olefin.

Preferably, in step p(i), the polyolefin and maleic anhydride are reacted substantially to completion before step (i). The polyolefin/maleic anhydride product of step p(i) may be isolated and purified prior to step (i).

Where the process includes both step p(i) and step (i), preferably the overall molar ratio of maleic anhydride : polyolefin reactants used in step p(i) and step (i) is greater than 1. Preferably, the molar ratio is greater than 1.1 and more preferably is greater than 1.4. In the most preferred embodiment, the molar ratio is at least 2.

Where the process includes step p(i), the maleic anhydride for this reaction and for step (i) may be added in a single step. Alternatively, additional maleic anhydride may be added after step p(i) for step (i).

The molar ratio of free radical initiator : olefin used in step (i), is preferably less than 1 and, more preferably, less than 0.5. The ratio may suitably be about 0.25. The free radical initiator is preferably added to the reactants when they are at an elevated temperature, suitably in the range 100°C-200°C and preferably under an inert gas, for example, under nitrogen. The radical initiator may be in a solvent, for example, a mineral spirit, the mixture suitably being added to the reactants in a plurality of portions over a period of time, for example, 3 to 5 hours. The reaction may be allowed to continue for 10-30 hours, suitably until substantially all of the radical initiator has reacted, before isolation and purification of the product formed in step (i).

At the end of step (i), the number of moles of maleic anhydride that have reacted with each mole of polyolefin (i.e. the succination ratio) is suitably greater than 1.0 moles of maleic anhydride per mole of olefin. Preferably, at the end of step (i), the succination ratio is at least 1.3 moles of maleic anhydride per mole of olefin. More preferably, at the end of step (i), the succination ratio is at least 1.6 moles of maleic anhydride per mole of olefin.

Step (ii) preferably involves reacting the substantially purified product obtained in step (i) with said amine. The reaction is preferably carried out at an elevated temperature, more preferably at greater than 100°C, suitably at a temperature in the range 140°C to 180°C. The product of step (i) is suitably heated and the amine added gradually in small portions over an extended period, for example, half-an-hour. After complete addition of the amine, the reaction may be allowed to continue for 2-10 hours, suitably for about 5 hours. Preferably, during the reaction, water generated is removed. The reaction mixture is subsequently allowed to cool and the polyolefin-substituted succinimide is isolated by standard procedures.

The polyolefin utilisable in step p(i) is preferably derived from a homopolymer or copolymer of one or more olefin monomers having 2 to 16 preferably from 2 to 6, carbon atoms. The copolymers include random, block and tapered copolymers. Suitable monomers include ethene, propene, butenes, isobutene, pentenes, octenes, and also diolefines, for example butadiene and isoprene. If a diene is used as monomer the resulting polymer is preferably hydrogenated to saturate at least 90%, more preferably substantially all unsaturated bonds. It is especially preferred to use a polyolefin substituent derived from polyisobutylene.

The molecular weight of the polyolefin (measured as a number average) is suitably within the range 600-5000. Preferably, the number average molecular weight is in the range 600-3000. Molecular weights lower than 600 can cause solubility and volatility problems in some lubricating oils, whereas molecular weights above 3000 can result in products with too high viscosity. To diminish the risks of the above problems, the number average molecular weight is preferably in the range 750-2500.

The number average molecular weight (Mₙ) of the polyolefin can easily be determined by quantitative reaction with ozone, vapour pressure osmometry or by gel permeation chromatography with calibration of the polymer, as will be appreciated by those skilled in the art. The weight average molecular weight (M_{w}) can also be determined by gel permeation chromatography. The quotient M_{w}/Mₙ, which is a measure indicating the width of molecular weight distribution, suitably has a value from 1.5 to 4.0. Polyisobutylene products fulfilling the conditions described above and which, therefore, are suitable for use in the process of the present invention, are commercially available, for example, under the Trade Mark "Hyvis".

Where the process is for the preparation of halogenated, for example chlorinated, polyolefin-substituted succinimides, chlorine is suitably used as a co-reactant in step p(i).

Said free radical initiator used in step (i) is preferably an organic compound. Preferably, said free radical initiator is an organic peroxide, for example, t-butyl-perbenzoate.

The amine used in step (ii) is preferably a polyamine with 3 to 25 carbon atoms selected from linear and branched polyamines, cycloaliphatic polyamines and heterocyclic polyamines. The amine preferably includes at least one =NH (secondary amino) group.

Suitable branched polyamines used in step (ii) of the present invention include those of formula I 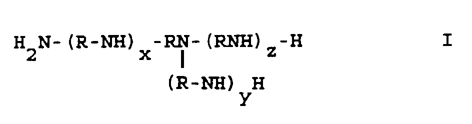 in which R is a C₂₋₄ alkylene group, x is 0-7, y is 1-7, z is 0-7 and x + y + z is 1-8.

Cycloaliphatic polyamines are suitably selected from 5 or 6-membered ring systems, for example cyclopentane or cyclohexane rings. The amino groups may be attached directly to the rings, or alternatively the rings may be substituted by amino alkyl groups. A suitable cyclic polyamine is 1,4-diaminocyclohexane. Among suitable heterocyclic polyamines are tetra- and dihydro pyridines, piperidines, azetidines, pyrroles, piperazines, substituted by one or more amino, amino alkyl groups of formula II

H₂N-(R-NH)_{w}-R

in which w is from 0-5 and R is a C₂₋₄ alkylene group. Especially preferred are N-(2-aminoethyl)piperazine and 1,4-bis(2-aminoethyl)piperazine.

Suitable linear polyamines used in the succinimide reaction product of the present invention include the ethylene polyamines, but also alpha,beta-diaminopropane or butane, propylene polyamines, di(trimethylene)triamine, and butylene polyamines. Particularly preferred are the ethylene polyamines, for example diethylene triamine, triethylene tetramine, tetraethylene pentamine and pentaethylene hexamine. Such compounds are conveniently prepared by reacting an alkylene chloride with ammonia or by reacting ethylene imine with e.g. ammonia. These reactions result in a mixture of alkylene polyamines, including cyclic products such as piperazines.

The polyamines advantageously have a molecular structure consisting of -[N(R₂)-R₁]ₐ- and/or 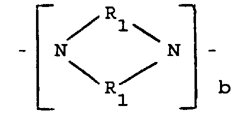 as the building blocks and of -R₁-NR₂R₃ and/or 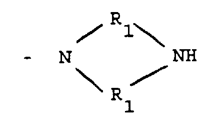 as the chain terminating groups, wherein R₁ is ethylene, propylene, trimethylene or a butylene group, R₂ and R₃ are hydrogen or -R₁-NH₂, a is 0 to 7 and b is 1 to 3.

The polyolefin-substituted succinimides may also be subjected to post-treatment according to procedures well-known to those skilled in the art (e.g. as described in U.K. Patent No. 1 565 627), for example by reaction with sulphur or phosphorous derivatives or, especially, by reaction with boron derivatives, for example, boron oxides or acids and the invention, therefore, extends to novel polyolefin-substituted succinimides when post-treated as described above.

As discussed above, it is believed that, in the product of the process, the number of succinimide moieties per olefin molecule (the succination ratio) and their position on the polyolefin chain are different in comparison to products of other routes used for the production of polyolefin-substituted succinimides. Therefore, the invention extends to a novel optionally halogenated polyolefin-substituted succinimide preparable by the process of said first aspect.

The invention extends to a lubricating oil composition comprising a major amount (more than 50%w) of a lubricating oil and a minor amount of an optionally halogenated polyolefin-substituted succinimide as described above.

The lubricating oil used in the present compositions can be natural, mineral or synthetic in origin. Natural lubricating oils include animal and vegetable oils, such as castor oil. Mineral oils comprise the lubricating oil fractions derived from crude oils, coal or shale, which factions may have been subjected to certain treatments such as clay-, acid-, solvent- or hydrogenation treatments. Synthetic lubricating oils include synthetic polymers of hydrocarbons, modified alkylene oxide polymers, and ester lubricants, which are known in the art. These lubricating oils are preferably crankcase lubricating oils for spark-ignition and compression-ignition engines, but include also hydraulic lubricants, metal-working fluids, automatic transmission fluids and the like.

The lubricating oil composition according to the present invention preferably contains the optionally halogenated polyolefin-substituted succinimide in an amount from 0.1 to 10%w, more preferably from 0.5 to 5%w, based on the total composition. The composition may contain various other additives, known in the art, such as viscosity index improvers, e.g. linear or star-shaped polymers of a diene such as isoprene or butadiene, or a copolymer of such a diene with optionally substituted styrene. These copolymers are suitably block copolymers and are preferably hydrogenated to such an extent as to saturate most of the olefinic unsaturation. Other suitable additives include extreme pressure/anti-wear additives such as zinc or sodium dithiophosphates, anti-oxidants, friction modifiers or metal-containing detergents such as phenates, sulphonates, alkylsalicylates or naphthenates, all of which detergents may be overbased.

The lubricating oil composition according to the invention has excellent dispersancy properties.

The lubricating oil composition according to the present invention is suitably prepared by blending an additive concentrate into the lubricating base oil. Such a concentrate generally comprises a lubricating oil as inert carrier fluid and one or more additives in a concentrated form. Hence the present invention further provides an additive concentrate comprising an inert carrier fluid and from 10 to 80%w, based on the total concentrate, of an optionally halogenated polyolefin-substituted succinimide as described above, optionally after a post-treatment as indicated supra.

The polyolefin succinimides of the present invention may also be used in fuels, for example, gasoline, kerosine and fuel oils.

The invention is illustrated by the following examples.

Examples 1 to 5 and 12a relate to the preparation of polyolefin-substituted succinic anhydrides from a polyolefin and maleic anhydride solely by thermal reaction (designated step p(i) above); Examples 6 to 10 relate to the preparation of highly succinated polyolefin-substituted succinic anhydrides utilising a purified less highly succinated polyolefin-substituted anhydride with additional maleic anhydride and a free radical initiator (designated step (i) above); comparative Example A relates to the preparation of a polyolefin-substituted succinic anhydride utilising a polyolefin, maleic anhydride and a free radical initiator in a one-stage reaction; comparative Example B relates to the preparation of polyolefin-substituted succinic anhydrides utilising a purified polyolefin-substituted succinic anhydride and a free radical initiator in the absence of any additional maleic anhydride; Examples 12b and 13 to 16 relate to the preparation of polyolefin-substituted succinic anhydride in a two-stage reaction wherein less highly succinated polyolefin-substituted succinic anhydrides produced in a first stage are not isolated prior to a second stage in which more highly succinated anhydrides are prepared utilising excess maleic anhydride and a free radical initiator (combination of steps p(i) and (i) as designated above); Examples 17 to 21 (step (i) as designated above) and Comparative Examples C to F relate to the preparation of polyolefin-substituted succinimides utilising polyolefin-substituted succinic anhydrides prepared in some of the above Examples 1 to 16; Examples 22 and 23 relate to the preparation of highly succinated polyolefin-substituted succinic anhydrides utilising a purified less highly succinated polyolefin-substituted polyolefin-substituted anhydride from the chlorine route with additional maleic anhydride and a radical initiator; Examples 24 and 25 relate to the preparation of a succinimide from the anhydrides of Examples 22 and 23; Examples 26 to 28 relate to performance testing of some of the succinimides described.

Examples 1-25 relate to the preparation of compounds by processes in accordance with the present invention. Examples A to F are provided for comparison purposes.

In the Examples, reference is made to the "active matter content". This term refers to the weight % of polyolefin-substituted succinic derivatives present in a reaction product. Unless otherwise indicated, the number average molecular weight (Mₙ) of each of the polyolefins used in the Examples was determined by quantitative reaction with ozone on the assumption that each oligomer chain contains one double bond, as will be readily understood by those skilled in the art.

### A. Preparation of polyolefin-substituted succinic anhydrides via a non-chlorine route.

### Example 1.

A mixture of "HYVIS" 10 (Trade Mark) polyisobutylene (PIB) ex BP Chemicals with a number average molecular weight of 980 (2069.5 g, 2.11 mol) and maleic anhydride (MALA) (260.5 g, 2.66 mol) was heated for 24 hours to reflux (200°C) in a 5 litre glass reactor equipped with a turbine stirrer and baffles, reflux condenser, nitrogen inlet, temperature probe and electrical heating mantle. Unreacted maleic anhydride was removed afterwards by vacuum distillation. The product was then diluted with heptane (about 50%w) and filtered to separate insoluble matter. After flashing off the solvent from the filtrate and 4 hours stripping of the residue in vacuo (0.08 mmHg) at 130°C to 140°C, the purified succinic anhydride was analyzed to have active matter content 64.2%w and acid value 1.48 meq/g. This data indicates a succination ratio of 1.27 mol MALA/mol PIB.

### Example 2.

From an experiment analogous to Example 1 a succinic anhydride product with active matter content 66.6%w, acid value 1.40 meq/g and succination ratio 1.15 mol MALA/mol PIB was isolated.

### Example 3.

"HYVIS 75" (Trade Mark) polyisobutylene ex BP Chemicals with number average molecular weight 1890 (2272.7 g, 1.2 mol) and maleic anhydride (236.1 g, 2.41 mol) were reacted in accordance with the method of Example 1. After identical work-up, a succinic anhydride was obtained with an active matter content of 64.6%w and an acid value of 0.68 meq/g, indicating a ratio of 1.05 mol MALA/mol PIB.

### Example 4.

A mixture of "HYVIS" 75 (Trade Mark) polyisobutylene (328.0 g, 0.17 mol) and maleic anhydride (25.6 g, 0.26 mol) was heated to 235°C under nitrogen with stirring in a stainless steel autoclave of 0.5 litre internal volume. By way of an overhead venting system a constant pressure of 2.5 bar (2.5 x 10⁵ Pa) was maintained throughout the reaction. Purification as in Example 1 gave, after separation of 0.5%w on total product insoluble matter, a succinic anhydride with active matter content 63.5%w, acid value 0.72 meq/g and a succination ratio of 1.13 mol MALA/mol PIB.

### Example 5.

A mixture of a propylene oligomer with number average molecular weight 1710 (309.8 g, 0.18 mol) and maleic anhydride (61.3 g, 0.62 mol) was reacted for 8 hours at 235°C as in Example 4. After separation of 2.7%w insoluble matter a purified succinic anhydride with active matter content 98.0%w and acid value 1.41 meq/g was obtained. This data indicates a succination ratio of 1.32 mol MALA/mol propylene oligomer.

### Example 6.

To the succinic anhydride from Example 2 (127.4 g) and maleic anhydride (11.8 g, 0.12 mol) heated to 140°C with stirring and carefully under nitrogen, 1.27 g (4.9 mmol) of a 75%w solution of t-butyl-perbenzoate in aromatic free mineral spirit ("Trigonox" C-C75 (Trade Mark); ex AKZO Chemie) was added using a syringe in five equal portions in 4 hours. After the last addition the reaction was allowed to proceed for another 18 hours. The reaction mixture was then stripped in vacuo for 2 hours at 140°C, dissolved in heptane to about 50%w, filtered, and after flashing off the solvent, again stripped for 4 hours in vacuo at 130°C. The amount of insoluble matter removed by the filtration was 2.7%w on total product. The purified end product was found to have an active matter content of 71.2%w, an acid value of 1.74 meq/g and a succination ratio of 1.36 mol MALA/mol PIB.

### Example 7.

The succinic anhydride from Example 2 (274.4. g), maleic anhydride (25.4 g, 0.26 mol) and "Trigonox" C-C75 (Trade Mark) free radical initiator (11.1 g, 42.9 mmol) were reacted and worked up following the procedure of Example 6. Insoluble matter was 2.8%w, and the purified orange-brown coloured end product was found to have active matter content 78.5%w, acid value 2.48 meq/g and a succination ratio 1.83 mol MALA/mol PIB.

### Example 8.

To a mixture of the succinic anhydride from Example 1 (378.0 g) and maleic anhydride (68.0 g, 0.69 mol) stirred at 140°C, "Trigonox" C-C75 (Trade Mark) free radical initiator (13.8 g, 53.3 mmol) was added with stirring in one portion from a dropping funnel, and allowed to react for 2.5 hours. By work-up as in Example 6, 4%w insoluble matter was separated. The succinic anhydride end product was found to have active matter content 72.1%w, and acid value 2.19 meq/g. This data indicates a succination ratio of 1.75 mol MALA/mol PIB.

### Example 9.

Succinic anhydride from Example 4 (192.0 g), maleic anhydride (8.0 g, 0.08 mol) and "Trigonox" C-C75 (Trade Mark) free radical initiator (9.1 g, 35.4 mmol) were reacted as in Example 6, except that the radical initiator was added in 8 equal portions in 7 hours and after-reaction was allowed overnight. Work-up yielded a purified succinic anhydride with an active matter content of 75.4%w and an acid value of 1.10 meq/g, indicating a succination ratio of 1.48 mol MALA/mol PIB.

### Example 10.

To a mixture of the succinic anhydride from Example 3 (230.8 g) and maleic anhydride (14.7 g, 0.15 mol), "Trigonox" C-C75 (Trade Mark) free radical initiator (19.4 g, 75.0 mmol) was added in 6 equal portions in 5 hours, and allowed to react overnight. By work-up as in Example 6, 1.1%w insoluble matter was separated, and the succinic anhydride end product was analyzed to have an active matter content 77.0%w, acid value 1.34 meq/g, and a succination ratio of 1.8 mol MALA/mol PIB.

### Example 11.

To a mixture of succinic anhydride from Example 5 (98.5 g) diluted with 85.3 g "HVI" 60 (Trade Mark) base oil (a bright and clear high viscosity index base oil having viscosity at 100°C of 4.4 to 4.9 mm²/s (ASTM D 2270)) and maleic anhydride (8.8. g, 0.09 mol), "Trigonox" C-C75 (Trade Mark) free radical initiator (3.5 g, 13.5 mmol) was added in 5 equal portions in 4 hours, and allowed to react further overnight following the procedure of Example 6. After purification as in Example 6 the succinic anhydride product was found to have active matter content 53.3%w and acid value 1.08 meq/g, indicating a succination ratio of 1.92 mol MALA/mol propylene oligomer.

### Comparative Example A.

A mixture of "HYVIS" 10 (Trade Mark) polyisobutylene (211.3 g, 0.22 mol) and maleic anhydride (21.1 g, 0.22 mol) was heated to 140°C carefully under nitrogen. "Trigonox" C-C75 (Trade Mark) free radical initiator (13.9 g, 53.9 mmol) was added with a syringe in five equal portions in 4 hours. After the last addition, the reaction was allowed to proceed for another 1.5 hours. After work-up as in Example 6, 3.8%w of insoluble matter was separated, and the purified end product was found to have an active matter content of 45.4%w and an acid value of 1.05 meq/g, suggesting a succination ratio of 1.28 mol MALA/mol PIB. In an analogous experiment without radical initiator the succinic anhydride had an acid value of only 0.03 meq/g.

### Comparative Example B.

The succinic anhydride from Example 2 (132.4 g) was reacted with "Trigonox" C-C75 (Trade Mark) free radical initiator (8.85 g, 34.2 mmol) in the same way as in Example 6, albeit in the absence of maleic anhydride. The succinic anhydride product had an active matter content of 65.7%w, an acid value of 1.26 meq/g, and a succination ratio of 1.04 mol MALA/mol PIB.

### Example 12.

(a) "HYVIS" 10 (Trade Mark) polyisobutylene (269.9 g, 0.27 mol) and maleic anhydride (53.9 g, 0.55 mol) were made to react for 24 hours at 200°C. Work-up and analysis as in Example 1 showed the succinic anhydride product to have active matter content 66.2%w, acid value 1.48 meq/g and a succination ratio of 1.23 mol MALA/mol PIB.
(b) An identical thermal reaction between "HYVIS" 10 (Trade Mark) polyisobutylene (157.0 g, 0.16 mol) and maleic anhydride (31.4 g, 0.32 mol) was run for 24 hours. Then, the reaction mixture was allowed to cool to 140°C, and "Trigonox" C-C75 (Trade Mark) free radical initiator (4.15 g, 16.0 mmol) was added using a syringe in four equal portions in 3 hours. After the final addition, the reaction was allowed to proceed for another two hours. After work-up as in Example 6, the succinic anhydride product was found to have active matter content 74.5%w, acid value 2.0 meq/g and a succination ratio of 1.51 mol MALA/mol PIB. Insoluble matter in an amount of 1.1%w on total product was separated.

### Example 13.

A thermal reaction identical to Example 12(a) was carried out between "HYVIS" 10 (Trade Mark) polyisobutylene (212.2 g, 0.22 mol) and maleic anhydride (42.4 g, 0.43 mol). Subsequently "Trigonox" C-C75 (Trade Mark) free radical initiator (16.8 g, 64.9 mmol) was added in five equal portions in 4 hours, and the final reaction mixture was allowed to react overnight at 140°C. By work-up as in Example 6, 1.6%w of insoluble matter was separated. The purified succinic anhydride product was analysed to have active matter content 79.3%w and acid value 2.59 meq/g, indicating a succination ratio of 1.9 mol MALA/mol PIB.

### Example 14.

A thermal reaction identical to Example 12(b) was carried out between "HYVIS" 10 (Trade Mark) polyisobutylene (148.4 g, 0.15 mol) and maleic anhydride (29.7 g, 0.3 mol). Then, di-tert-butylperoxide ("Trigonox" B (Trade Mark) ex AKZO (6.7 g, 58.8 mmol)) was added in five equal portions in 4 hours, and the final reaction mixture was allowed to react for an additional 2 hours at 160°C. After separation of 1.8%w insoluble matter as in Example 6, the purified end product was found to have an active matter content of 77.6%w and an acid value of 2.29 meq/g. This indicates a succination ratio of 1.69 mol MALA/mol PIB.

### Example 15.

A thermal reaction identical to Example 12(b) was run between "HYVIS" 10 (Trade Mark) polyisobutylene (106.7 g, 0.11 mol) and maleic anhydride (21.3 g, 0.22 mol). Then, "Trigonox" C-C75 free radical initiator (16.9 g, 65.3 mmol) was added in five equal portions in 4 hours at 140°C, and the final reaction mixture was allowed to react overnight. After separation of 2.6%w insoluble matter as in Example 6, the purified succinic anhydride product was analyzed to have an active matter content of 84.3%w, acid value of 2.46 meq/g and a succination ratio of 1.67 mol MALA/mol PIB.

### Example 16.

"HYVIS" 75 (Trade Mark) polyisobutylene (2491.6 g, 1.32 mol) and maleic anhydride (258.4 g, 2.64 mol) were heated to reflux (200°C) for 24 hours as in Example 1. A small sample taken from the final reaction mixture was purified and analysed as in Example 1, and found to have active matter content 57.5%w, acid value 0.66 meq/g and a succination ratio of 1.15 mol MALA/mol PIB. Insoluble matter removed by filtration was a black tarry substance in an amount of 0.2%w on total product. The remainder of the reaction mixture was allowed to cool to 140°C and "Trigonox" C-C75 (Trade Mark) free radical initiator (102.4 g, 0.39 mol) was added from a dropping funnel in five equal portions in 4 hours. After addition the reaction was allowed to proceed another 2 hours. Work-up of the reaction mixture following Example 6 gave a clear, viscous product with an active matter content of 74.2%w, an acid value of 1.33 meq/g and a succination ratio of 1.85 mol MALA/mol PIB. Insoluble matter removed in isolation of the desired product was in an amount of 1.7%w on total product.

### B. Preparation of polyolefin-substituted succinimides from succinic anhydrides prepared in A.

### Example 17.

The succinic anhydride from Example 7 (130.6 g) was heated to 180°C in a glass reactor equipped with turbine stirrer, dropping funnel, Dean and Stark water separator, nitrogen inlet, temperature probe and electrical heating mantle. Triethylene tetramine (TETA) (11.6 g) was added dropwise over 0.5 hour, and reaction was allowed to continue, at 180°C, for 5 hours, during which time water generated by the reaction was removed. At the end of this period, the residue was allowed to cool to ambient temperature, yielding the desired succinimide product as an amber-brown viscous liquid, which was found to have residual acid value 0.06 meq/g, total nitrogen content 3.05%w and basic nitrogen content 1.24%w.

### Example 18.

The succinic anhydride from Example 9 (153.1 g) was diluted with 65.5 g "HVI" 60 (Trade Mark) base oil, and then reacted as in Example 17 with 8.4 g tetraethylene pentamine (TEPA). The succinimide product was found to have active matter content 52.8%w, residual acid value 0.03 meq/g, total nitrogen content 1.13%w and basic nitrogen content 0.72%w.

### Example 19.

Following the procedure of Example 17, the succinic anhydride from Example 10 (154.7 g) was reacted with 10.3 g tetraethylene pentamine. After completion of the reaction the end product was diluted with 91.8 g "HVI" 60 (Trade Mark) base oil. The succinimide product was found to have active matter content 46.5%w, residual acid value 0.1 meq/g, total nitrogen content 1.37%w and basic nitrogen content 0.74%w.

### Example 20.

The succinic anhydride from Example 11 (176.4 g) diluted with 37.0 g "HVI" 60 (Trade Mark) base oil was made to react with tetraethylene pentamine (9.5 g) following the procedure of Example 17. The succinimide product was found to have active matter content 46.4%w, total nitrogen content 1.46%w and basic nitrogen content 0.76%w.

### Example 21.

The succinic anhydride from Example 16 (2479.1 g) was diluted with 1336.6 g "HVI" 60 (Trade Mark) base oil, and then allowed to react with tetraethylene pentamine (163.9 g) following the procedure of Example 17. The succinimide product was obtained as an amber-brown viscous liquid, and was found to have active matter content 50.2%w, residual acid value 0.03 meq/g, total nitrogen content 1.39%w and basic nitrogen content 0.83%w.

### Comparative Example C.

Following the procedure of Example 17, the succinic anhydride from Comparative Example A (85.7 g) was made to react with triethylene tetramine (3.5 g). The dark brown viscous product was analyzed to have active matter content 46.8%w, residual acid value 0.04 meq/g, total nitrogen content 1.48%w and basic nitrogen content 0.58%w.

### Comparative Example D.

Following the procedure of Example 17, the succinic anhydride from Example 1 (37.3 g) was allowed to react with triethylene tetramine (2.0 g). The succinimide product was analyzed to have residual acid value 0.009 meq/g, total nitrogen content 1.79%w, and basic nitrogen content 0.87%w.

### Comparative Example E.

According to the procedure of Example 17, the succinic anhydride obtained in Comparative Example B (104.1 g) was reacted with 4.7 g triethylene tetramine. The succinimide formed was analyzed to have residual acid value 0.04 meq/g, total nitrogen content 1.47%w and basic nitrogen content 0.60%w.

### Comparative Example F.

The propylene oligomer succinic anhydride from Example 5 (99.5 g) was reacted with tetraethylene pentamine (6.97 g) following the method of Example 17. The succinimide product was analyzed to have active matter content 98.1%w, residual acid value 0.02 meq/g, total nitrogen content 2.35%w and basic nitrogen content 1.25%w.

### C. Preparation of more highly succinated polyolefin-substituted succinic anhydrides by reacting maleic anhydride with chlorine-based succinic anhydrides.

### Example 22

A succinic anhydride made from "HYVIS" 10 (Trade Mark) polyisobutylene (PIB) and maleic anhydride (MALA) by using chlorine as a coreactant (PIB : MALA : chlorine = 1 : 1.2 : 1.1) at 145 - 200°C following a method well-known to those skilled in the art, was found to have active matter content 88.9%w and acid value 1.94 meq/g, indicating a succination ratio of 1.15 mol MALA/mol PIB. It contained 2640 ppm residual chlorine.

To a mixture of this succinic anhydride (462.5 g) and maleic anhydride (48.4 g, 0.49 mol), "Trigonox" C-C75 (Trade Mark) free radical initiator (30.5 g, 0.12 mol) was added in 8 portions in 7 hours at 140°C, and the reaction was allowed to proceed overnight. Work-up following the procedure of Example 6 gave a viscous and clear dark coloured product with active matter content 92.1%w, acid value 2.92 meq/g and a succination ratio of 1.78 mol MALA/mol PIB. The residual chlorine content was 1670 ppm.

### Example 23.

In the same manner as in Example 22 a succinic anhydride was made from "HYVIS" 75 (Trade Mark) polyisobutylene and maleic anhydride using chorine as a coreactant. After addition of some "HVI" 60 (Trade Mark) base oil it was analysed to have active matter content 63.9%w and acid value 0.65 meq/g, indicating a succination ratio of 1.01 mol MALA/mol PIB. It contained 1900 ppm residual chlorine.

To a mixture of this succinic anhydride (553.0 g) and maleic anhydride (19.2 g, 0.19 mol), "Trigonox" C-C75 (Trade Mark) free radical initiator (27.3 g, 0.11 mol) was added following the procedure of Example 22. The purified end product was analysed to have active matter content 73.3%w, acid content 1.10 meq/g and a succination ratio of 1.55 mol MALA/mol PIB. The residual chlorine content was 800 ppm.

### D. Preparation of polyolefin-substituted succinimides from succinic anhydrides prepared in C.

### Example 24.

Following the procedure of Example 17, the succinic anhydride from Example 22 (419.0 g) was made to react with triethylene tetramine (47.1 g). After completion of the reaction 301 g "HVI" 60 (Trade Mark) base oil was added. The end product was analysed to have active matter content 55.8%w, residual acid value 0.05 meq/g, total nitrogen content 2.25%w and basic nitrogen content 1.01%w. The residual chlorine content was 900 ppm.

### Example 25.

Following the procedure of Example 17, the succinic anhydride from Example 23 (510.2 g) was reacted with tetraethylene pentamine (28.0 g). After completion the reaction mixture was diluted with 253 g "HVI" (Trade Mark) 60 base oil. The end product was analysed to have active matter content 50.5%w, residual acid value 0.04 meq/g, total nitrogen content 1.20%w and basic nitrogen content 0.67%w. The residual chlorine content was 500 ppm.

### E. Dispersant Performance testing of polyolefin-substituted succinimides prepared in B and D.

### Example 26.

### (a) Carbon Black Dispersancy Test (CBDT). (British Rail Publication BR 669 : 1984)

Samples of a SAE 15W40 Middle East lubricating oil containing a commercial package of a zinc dialkyldithiophosphate, an overbased calcium alkyl salicylate and viscosity index improver, were modified by incorporation of the polyolefin-substituted succinimide products prepared in B and D to give oils containing a concentration of 1%w active matter of the succinimide dispersant. 3%w carbon black was then added to each oil and the (percentage) increase in kinematic viscosity at 60°C was determined, using an Ubbelohde viscometer. Results are shown in Table I. A low result indicates good performance.

### Example 27

### (b) Fluoroelastomer Seal Compatibility Test (FSCT)

The polyolefin substituted succinimides prepared in B and D were incorporated in lubricating oils to give concentrations of 1.5%w active matter and tested for compatibility with fluoroelastomer seal materials according to the method of DIN 53504 and, specifically, Daimler Benz specification DB 6615. Percentage reduction in tensile strength (TS) and elongation at break (EB) were assessed, the results being shown in Table I. Low results indicate good performance.

In Table I, a "-" indicates that the particular test was not undertaken. "a" and "b" represent viscosity increase results obtained with carbon black types with different surface area. "SAP220" and "Lz6418" are commercially available PIB-based bis-succinimide ashless dispersants made using chlorine mediated PIB-MALA coupling process, and a succination ratio of about 1.1 and 1.7 mol MALA/mol PIB, respectively.

**TABLE I**

| Polyolefin-substituted succinimide of: | CBDT (%) | | FSCT | |
|---|---|---|---|---|
| | a | b | TS (%) | EB (%) |
| Example 17 | 68 | - | - | - |
| Example 18 | 140 | - | 19 | 17 |
| Example 19 | - | 16 | 23 | 20 |
| Example 20 | 91 | - | 17 | 14 |
| Comparative Example C | - | 24 | 11 | 13 |
| Comparative Example D | 162 | - | - | - |
| Comparative Example E | 166 | - | - | - |
| Comparative Example F | 183 | - | 26 | 21 |
| Example 24 | 100 | - | 36 | 35 |
| Example 25 | 113 | - | 28 | 22 |
| SAP 220 | 205 | 30 | 44 | 44 |
| Lz 6418 | 120 | 19 | 15 | 20 |

### Example 28

### (c) Sequence 5E Engine Testing of polyolefin-substituted succinimide dispersants (according to ASTM D5302).

Results are shown in Table 2 where:
- AES =: Average Engine Sludge (scale 0-10, where 10 represents no sludge).
- RACS =: Rocker Arm Cover Sludge (scale 0-10, where 10 represents no sludge).
- AEV =: Average Engine Varnish (scale 0-10, where 10 represents no varnish).
- PSV =: Piston Skirt Varnish (scale 0-10, where 10 represents no varnish).
- ACW =: Average Cam Lobe Wear [cm x 10⁻³ (inches x 10⁻³)].
- MCW =: Maximum Cam Lobe Wear [cm x 10⁻³ (inches x 10⁻³)].

**TABLE 2**

| **Test** | **Example No. 21** | **Comparative Dispersant Lz 6418** |
|---|---|---|
| AES | 9.39 | 9.36 |
| RACS | 9.10 | - |
| AEV | 5.73 | 5.77 |
| PSV | 6.90 | - |
| ACW | 2.06 (0.81) | 6.71 (2.64) |
| MCW | 10.41 (4.10 ) | 15.75 (6.20) |

## Claims (Claims for the following Contracting State(s): BE, ES, IT, NL)

1. A process for the preparation of an optionally halogenated polyolefin-substituted succinimide, the process comprising:
(i) allowing the product formable by reaction of an optionally halogenated polyolefin with maleic anhydride to react with further maleic anhydride in the presence of a free radical initiator; and
(ii) reacting the product of step (i) with an amine.

2. A process as claimed in Claim 1, wherein step (i) is preceded by a preliminary step p(i) which comprises reacting said polyolefin with maleic anhydride prior to said reaction with further maleic anhydride in the presence of said free radical initiator.

3. A process as claimed in Claim 2, wherein step p(i) is a thermal reaction in the absence of chlorine.

4. A process as claimed in Claim 2 or Claim 3, wherein said polyolefin is allowed to react with maleic anhydride for at least six hours in step p(i).

5. A process as claimed in any of Claims 2 to 4, wherein said polyolefin is allowed to react with maleic anhydride in step p(i) until at least 0.3 moles of maleic anhydride have reacted per mole of polyolefin present initially in the reaction mixture.

6. A process as claimed in any of Claims 2 to 5, wherein the overall molar ratio of maleic anhydride: polyolefin reactant used in step p(i) and step (i) is greater than 1.

7. A process as claimed in any preceding claim, wherein said amine used in step (ii) is a polyamine with 3 to 25 carbon atoms.

8. An optionally halogenated polyolefin-substituted succinimide preparable by a process according to any of Claims 1 to 7.

9. A lubricating oil composition comprising a major amount of a lubricating oil and a minor amount of an optionally halogenated polyolefin-substituted succinimide as claimed in Claim 8.

10. An additive concentrate comprising an inert carrier fluid and from 10 to 80%w, based on the total concentrate, of an optionally halogenated polyolefin-substituted succinimide as claimed in Claim 8.

## Claims (Claims for the following Contracting State(s): DE, FR, GB)

1. A process for the preparation of an optionally halogenated polyolefin-substituted succinimide, the process comprising:
(i) allowing the product formable by reaction of an optionally halogenated polyolefin with maleic anhydride to react with further maleic anhydride in the presence of a free radical initiator; and
(ii) reacting the product of step (i) with an amine at a temperature greater than 100°C.

2. A process as claimed in Claim 1, wherein step (i) is preceded by a preliminary step p(i) which comprises reacting said polyolefin with maleic anhydride prior to said reaction with further maleic anhydride in the presence of said free radical initiator.

3. A process as claimed in Claim 2, wherein step p(i) is a thermal reaction in the absence of chlorine.

4. A process as claimed in Claim 2 or Claim 3, wherein said polyolefin is allowed to react with maleic anhydride for at least six hours in step p(i).

5. A process as claimed in any of Claims 2 to 4, wherein said polyolefin is allowed to react with maleic anhydride in step p(i) until at least 0.3 moles of maleic anhydride have reacted per mole of polyolefin present initially in the reaction mixture.

6. A process as claimed in any of Claims 2 to 5, wherein the overall molar ratio of maleic anhydride: polyolefin reactant used in step p(i) and step (i) is greater than 1.

7. A process as claimed in any preceding claim, wherein said amine used in step (ii) is a polyamine with 3 to 25 carbon atoms.

8. An optionally halogenated polyolefin-substituted succinimide preparable by a process according to any of Claims 1 to 7.

9. A lubricating oil composition comprising a major amount of a lubricating oil and a minor amount of an optionally halogenated polyolefin-substituted succinimide as claimed in Claim 8.

10. An additive concentrate comprising an inert carrier fluid and from 10 to 80%w, based on the total concentrate, of an optionally halogenated polyolefin-substituted succinimide as claimed in Claim 8.

## Patentansprüche (Patentansprüche für folgende(n) Vertragsstaat(en): BE, ES, IT, NL)

1. Verfahren zur Herstellung eines gegebenenfalls halogenierten, Polyolefin-substituierten Succinimids, welches Verfahren umfaßt:
(i) Reagierenlassen des durch Umsetzung eines gegebenenfalls halogenierten Polyolefins mit Maleinsäureanhydrid erhältlichen Produktes mit weiterem Maleinsäureanhydrid in Gegenwart eines freiradikalischen Initiators; und
(ii) Umsetzen des Produktes aus Stufe (i) mit einem Amin.

2. Verfahren nach Anspruch 1, worin der Stufe (i) eine Vorstufe p(i) vorangeht, die ein Umsetzen des Polyolefins mit Maleinsäureanhydrid vor der Umsetzung mit weiterem Maleinsäureanhydrid in Gegenwart des freiradikalischen Initiators umfaßt.

3. Verfahren nach Anspruch 2, worin die Stufe p(i) eine thermische Umsetzung in Abwesenheit von Chlor ist.

4. Verfahren nach Anspruch 2 oder 3, worin das Polyolefin mit Maleinsäureanhydrid während wenigstens 6 Stunden in Stufe p(i) reagieren gelassen wird.

5. Verfahren nach einem der Ansprüche 2 bis 4, worin das Polyolefin mit Maleinsäureanhydrid in Stufe p(i) reagieren gelassen wird, bis wenigstens 0,3 Mol Maleinsäureanhydrid je Mol ursprünglich im Reaktionsgemisch vorliegendem Polyolefin reagiert haben.

6. Verfahren nach einem der Ansprüche 2 bis 5, worin das in Stufe p(i) und Stufe (i) angewandte Gesamtmolverhältnis von Maleinsäureanhydrid zu Polyolefin größer als 1 ist.

7. Verfahren nach einem der vorstehenden Ansprüche, worin das in Stufe (ii) verwendete Amin ein Polyamin mit 3 bis 25 Kohlenstoffatomen ist.

8. Gegebenenfalls halogeniertes, Polyolefin-substituiertes Succinimid, herstellbar nach einem Verfahren gemäß einem der Ansprüche 1-7.

9. Schmierölzusammensetzungen mit einem Gehalt an einer Hauptmenge eines Schmieröls und einer Nebenmenge eines gegebenenfalls halogenierten, Polyolefin-substituierten Succinimids nach Anspruch 8.

10. Additivkonzentrat mit einem Gehalt an einem inerten Trägerfluid und 10 bis 80 Gew.-%, bezogen auf das Gesamtkonzentrat, eines gegebenenfalls halogenierten, Polyolefin-substituierten Succinimids nach Anspruch 8.

## Patentansprüche (Patentansprüche für folgende(n) Vertragsstaat(en): DE, FR, GB)

1. Verfahren zur Herstellung eines gegebenenfalls halogenierten, Polyolefin-substituierten Succinimids, welches Verfahren umfaßt:
(i) Reagierenlassen des durch Umsetzung eines gegebenenfalls halogenierten Polyolefins mit Maleinsäureanhydrid erhältlichen Produktes mit weiterem Maleinsäureanhydrid in Gegenwart eines freiradikalischen Initiators; und
(ii) Umsetzen des Produktes aus Stufe (i) mit einem Amin bei einer Temperatur über 100°C.

2. Verfahren nach Anspruch 1, worin der Stufe (i) eine Vorstufe p(i) vorangeht, die ein Umsetzen des Polyolefins mit Maleinsäureanhydrid vor der Umsetzung mit weiterem Maleinsäureanhydrid in Gegenwart des freiradikalischen Initiators umfaßt.

3. Verfahren nach Anspruch 2, worin die Stufe p(i) eine thermische Umsetzung in Abwesenheit von Chlor ist.

4. Verfahren nach Anspruch 2 oder 3, worin das Polyolefin mit Maleinsäureanhydrid während wenigstens 6 Stunden in Stufe p(i) reagieren gelassen wird.

5. Verfahren nach einem der Ansprüche 2 bis 4, worin das Polyolefin mit Maleinsäureanhydrid in Stufe p(i) reagieren gelassen wird, bis wenigstens 0,3 Mol Maleinsäureanhydrid je Mol ursprünglich im Reaktionsgemisch vorliegendem Polyolefin reagiert haben.

6. Verfahren nach einem der Ansprüche 2 bis 5, worin das in Stufe p(i) und Stufe (i) angewandte Gesamtmolverhältnis von Maleinsäureanhydrid zu Polyolefin größer als 1 ist.

7. Verfahren nach einem der vorstehenden Ansprüche, worin das in Stufe (ii) verwendete Amin ein Polyamin mit 3 bis 25 Kohlenstoffatomen ist.

8. Gegebenenfalls halogeniertes, Polyolefin-substituiertes Succinimid, herstellbar nach einem Verfahren gemäß einem der Ansprüche 1-7.

9. Schmierölzusammensetzungen mit einem Gehalt an einer Hauptmenge eines Schmieröls und einer Nebenmenge eines gegebenenfalls halogenierten, Polyolefin-substituierten Succinimids nach Anspruch 8.

10. Additivkonzentrat mit einem Gehalt an einem inerten Trägerfluid und 10 bis 80 Gew.-%, bezogen auf das Gesamtkonzentrat, eines gegebenenfalls halogenierten, Polyolefin-substituierten Succinimids nach Anspruch 8.

## Revendications (Revendications pour l'(les) Etat(s) contractant(s) suivant(s): BE, ES, IT, NL)

1. Procédé de préparation d'un succinimide substitué par des polyoléfines, éventuellement halogénées, caractérisé en ce que
(i) on permet au produit, que l'on peut obtenir par la réaction d'une polyoléfine éventuellement halogénée avec l'anhydride maléique, de réagir davantage avec l'anhydride maléique, en présence d'un amorceur de radicaux libres et
(ii) de faire réagir le produit de l'étape (i) avec une amine.

2. Procédé suivant la revendication 1, caractérisé en ce que l'étape (i) est précédée d'une étape préliminaire p(i) qui comprend la réaction de ladite polyoléfine avec l'anhydride maléique avant ladite réaction avec une quantité supplémentaire d'anhydride maléique, en présence dudit amorceur à radicaux libres.

3. Procédé suivant la revendication 2, caractérisé en ce que l'étape p(i) est une réaction thermique en l'absence de chlore.

4. Procédé suivant la revendication 2 ou la revendication 3, caractérisé en ce qu'on laisse réagir ladite polyoléfine avec l'anhydride maléique pendant au moins six heures au cours de l'étape p(i).

5. Procédé suivant l'une quelconque des revendications 2 à 4, caractérisé en ce qu'on laisse réagir ladite polyoléfine avec l'anhydride maléique au cours de l'étape p(i) jusqu'à ce qu'au moins 0,3 mole d'anhydride maléique ait réagi par mole de polyoléfine présente à l'origine dans le mélange réactionnel.

6. Procédé suivant l'une quelconque des revendications 2 à 5, caractérisé en ce que le rapport molaire global anhydride maléique : réactif du type polyoléfine que l'on utilise au cours de l'étape p(i) et de l'étape (i) est supérieur à 1.

7. Procédé suivant l'une quelconque des revendications précédentes, caractérisé en ce que ladite amine utilisée au cours de l'étape (ii) est une polyamine avec de 3 à 25 atomes de carbone.

8. Succinimide à substitution polyoléfinique, éventuellement halogéné, que l'on peut préparer par le procédé suivant l'une quelconque des revendications 1 à 7.

9. Composition d'huile lubrifiante comprenant une quantité majeure d'une huile lubrifiante et une quantité mineure d'un succinimide à substitution polyoléfinique, éventuellement halogéné, suivant la revendication 8.

10. Concentré d'additif comprenant un liquide servant de véhicule inerte et de 10 à 80% en poids, sur base du concentré total, d'un succinimide à substitution polyoléfinique, éventuellement halogéné, suivant la revendication 8.

## Revendications (Revendications pour l'(les) Etat(s) contractant(s) suivant(s): DE, FR, GB)

1. Procédé de préparation d'un succinimide substitué par des polyoléfines, éventuellement halogénées, caractérisé en ce que
(i) on permet au produit, que l'on peut obtenir par la réaction d'une polyoléfine éventuellement halogénée avec l'anhydride maléique, de réagir davantage avec l'anhydride maléique, en présence d'un amorceur de radicaux libres et
(ii) de faire réagir le produit de l'étape (i) avec une amine à une température supérieure à 100°C.

2. Procédé suivant la revendication 1, caractérisé en ce que l'étape (i) est précédée d'une étape préliminaire p(i) qui comprend la réaction de ladite polyoléfine avec l'anhydride maléique avant ladite réaction avec une quantité supplémentaire d'anhydride maléique, en présence dudit amorceur à radicaux libres.

3. Procédé suivant la revendication 2, caractérisé en ce que l'étape p(i) est une réaction thermique en l'absence de chlore.

4. Procédé suivant la revendication 2 ou la revendication 3, caractérisé en ce qu'on laisse réagir ladite polyoléfine avec l'anhydride maléique pendant au moins six heures au cours de l'étape p(i).

5. Procédé suivant l'une quelconque des revendications 2 à 4, caractérisé en ce qu'on laisse réagir ladite polyoléfine avec l'anhydride maléique au cours de l'étape p(i) jusqu'à ce qu'au moins 0,3 mole d'anhydride maléique ait réagi par mole de polyoléfine présente à l'origine dans le mélange réactionnel.

6. Procédé suivant l'une quelconque des revendications 2 à 5, caractérisé en ce que le rapport molaire global anhydride maléique : réactif du type polyoléfine que l'on utilise au cours de l'étape p(i) et de l'étape (i) est supérieur à 1.

7. Procédé suivant l'une quelconque des revendications précédentes, caractérisé en ce que ladite amine utilisée au cours de l'étape (ii) est une polyamine avec de 3 à 25 atomes de carbone.

8. Succinimide à substitution polyoléfinique, éventuellement halogéné, que l'on peut préparer par le procédé suivant l'une quelconque des revendications 1 à 7.

9. Composition d'huile lubrifiante comprenant une quantité majeure d'une huile lubrifiante et une quantité mineure d'un succinimide à substitution polyoléfinique, éventuellement halogéné, suivant la revendication 8.

10. Concentré d'additif comprenant un liquide servant de véhicule inerte et de 10 à 80% en poids, sur base du concentré total, d'un succinimide à substitution polyoléfinique, éventuellement halogéné, suivant la revendication 8.
